# FASCICULE DE BREVET EUROPEEN

(11) **EP 2 190 283 B1**
(45) Date de publication et mention de la délivrance du brevet: **02.11.2011**
(21) Numéro de dépôt: 08849228.5
(22) Date de dépôt: 02.09.2008
(51) Int. Cl.: A01K 1/00, E04D 13/17

(54) **STRUCTURE DE TOIT VENTILE**
BELÜFTETE DACHSTRUKTUR
VENTILATED ROOF STRUCTURE

(30) Priorité: 10.09.2007 FR 0706312
(43) Date de publication de la demande: 02.06.2010
(73) Titulaire: Joris Ide NV, 8750 Zwevezele (BE)
(72) Inventeur: BERGEZ, Philippe, F-79300 Bressuire (FR)
(74) Mandataire: Robert, Jean-Pierre
(86) Numéro de dépôt international: PCT/FR2008/001221
(87) Numéro de publication internationale: WO 2009/063140

(56) Documents cités:
- CH-A5- 559 837
- DE-A1- 3 634 521
- DE-U1- 20 005 734
- GB-A- 1 393 977

## Description

La présente invention concerne le domaine de la construction métallique et notamment les structures de toitures métalliques.

### ARRIERE PLAN DE L'INVENTION

certains bâtiments tels que les bâtiments agricoles prévus pour abriter des animaux, pour stocker du bois, pour conserver des produits végétaux ...demandent une couverture perméable à l'air, pour assurer la ventilation de l'espace couvert.

Cette perméabilité est assurée de diverses manières. Par exemple, les panneaux de couverture en feuille métallique nervurée sont écartés les uns de autres par des écarteurs perforés que l'on interpose dans leur zone de recouvrement au droit des pannes qui supportent ces zones de chevauchement (voir GB 1 393 977). On ménage ainsi une ou plusieurs cloisons d'aération perforées, parallèles et parallèles aux pannes le long du versant du toit. La réalisation de ce type de toiture demande un soin particulier pour assurer de manière correcte la fixation des plaques de couverture sur la structure de support que forment les pannes notamment lorsque celles-ci sont en tôles minces profilées à froid. En outre, le nombre des composants est important ce qui a une incidence sur le coût de cette structure.

On propose également, pour assurer cette fonction, de ménager une ouverture le long de la panne faîtière que l'on recouvre d'une coiffe maintenue à distance de ce faîte et dans d'autres réalisations, des ouvertures filantes entre panneaux voisins de l'égout de toit à la faîtière. La ventilation est réalisée au détriment de l'étanchéité et la pose des panneaux de toit est assez malaisée.

Dans d'autres techniques, on assure une ventilation sous toiture en ayant prévu des perforations dans les pannes pour qu'un flux d'air puisse circuler de la gouttière au faîte sous les panneaux de couverture (voir DE 36 34521, CH 559 837). La ventilation assurée est alors insuffisante pour un couvert d'animaux.

Par l'invention, on propose une solution alternative à cette technique qui supprime tout composant supplémentaire par rapport à une structure de toiture en tôle nervurée et pannes à paroi mince non ventilée, qui est plus légère qu'une telle structure connue et qui permet d'éviter l'emploi de liens de stabilisation anti-déversement de l'ossature secondaire que forment lesdites pannes.

### OBJET DE L'INVENTION

A cet effet, la présente invention a donc pour objet une structure de toiture ventilée comportant, des arbalétriers sur lesdits arbalétriers, des échantignoles comportant une semelle et un montant, des pannes en tôles minces, profilées à froid pour former une âme bordée par deux semelles, rapportées sur les arbalétriers par fixation de leur âme au montant des échantignoles et sur ces pannes, des panneaux de couverture en tôle nervurée possédant chacun un bord amont et un bord aval par rapport à la pente du toit et fixés auxdites pannes par l'intermédiaire desdites semelles, dans laquelle structure chaque panneau est fixé par son bord amont sur la semelle inférieure de la panne qui le soutient en amont et par son bord aval, sur la semelle supérieure de la panne qui le soutient en aval, certaines au moins desdites pannes ayant une âme perforée.

On comprend que cette structure se construit de manière pratiquement classique alors qu'elle comporte en elle-même les ouvertures d'aération du volume couvert sans qu'il ait été nécessaire de mettre en oeuvre des écarteurs ou d'autres composants pour assurer cette ventilation. La pente de chaque panneau est bien entendu légèrement différente (inférieure) à celle de la pente générale du toit et pour en tenir compte il convient de mettre en oeuvre des échantignoles adaptées à cette différence de pente. En d'autres termes, l'âme de chaque panne ne sera pas maintenue perpendiculaire au plan général du toit mais sera inclinée sur ce plan d'un angle tel que les semelles des pannes seront dans les plans parallèles des panneaux de couverture.

Un avantage de cette structure réside dans la stabilisation automatique contre le déversement des pannes, obtenue par la fixation des panneaux sur les deux ailes d'une même panne. Cette fixation permet alors de se dispenser de mettre en oeuvre des liens de stabilisation qui sont coûteux et dont la mise en place est malcommode.

D'autres caractéristiques et avantages de l'invention ressortiront de la description donnée ci-après d'un exemple de réalisation de la structure de l'invention.

### BREVE DESCRIPTION DES DESSINS

Il sera fait référence aux dessins annexés parmi lesquels :
- la figure 1 est une vue schématique en coupe d'une pente de toit réalisée en accord avec l'invention,
- la figure 2 est une vue de détail de la structure de ce toit.

### DESCRIPTION DETAILLEE DE L'INVENTION

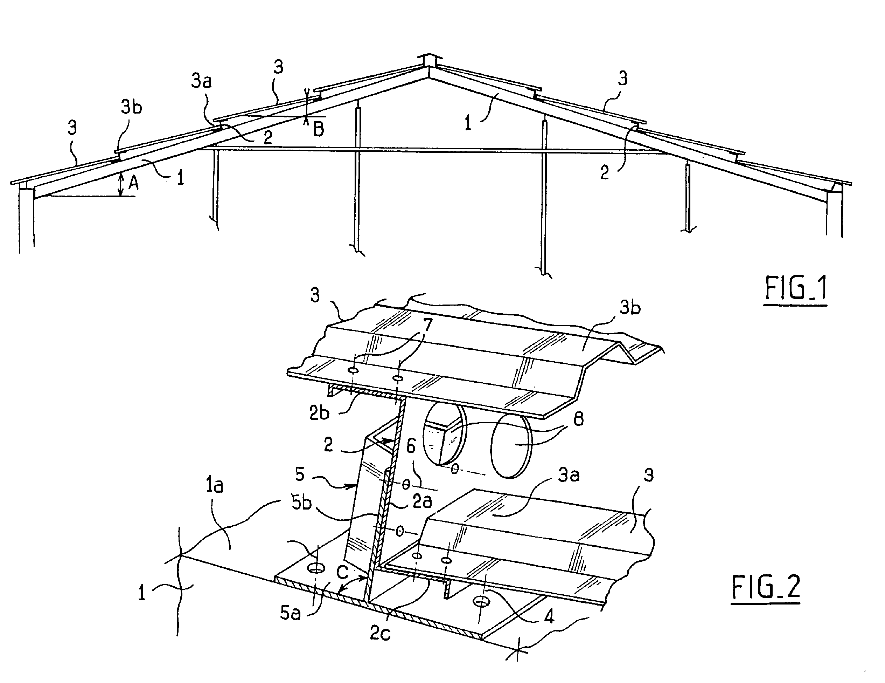

La figure 1 représente une structure de toit conforme à l'invention. Elle comprend par travée deux arbalétriers 1 qui soutiennent des pannes 2 en tôle mince profilée à froid, lesquelles forment les supports de panneaux métalliques 3, par exemple des panneaux en tôle d'acier nervurés. On remarque que la pente générale du toit est donnée par l'inclinaison des arbalétriers 1 et est notée A sur la figure 1. L'inclinaison de chaque panneau 3 est plus faible et est notée B sur cette figure. Cela tient au fait qu'un panneau a son bord amont 3a (le plus haut) fixé à la base de l'âme de la panne 2 amont alors que son bord aval 3b est fixé au sommet de l'âme de la panne 2 aval, comme cela ressortira plus précisément de la description de la figure 2.

Sur cette figure on retrouve les éléments de l'invention déjà décrits avec les mêmes références. La surface supérieure la d'un arbalétrier 1 reçoit et maintient par des vis 4 une échantignole 5 qui forme le moyen de fixation d'une panne 2 à l'étrier. Cette échantignole possède une semelle 5a et un montant 5b qui lui est sensiblement perpendiculaire. En réalité, l'angle C que forme le montant 5b avec la semelle 5a, vu de l'amont (côté gauche de la figure), est inférieur à 90°. C'est un angle aigu dont la valeur est égale à 90° diminuée d'une valeur égale à la différence des angles A et B de la figure 1.

La panne 2 se compose d'une âme 2a, d'une semelle supérieure 2b et d'une semelle inférieure 2c. Elle affecte la forme d'un Z mais ce ne serait pas sortir du cadre de l'invention que de lui donner une forme en sigma comme cela existe de manière courante dans le domaine. L'âme 2a de la panne est fixée au montant 5b de l'échantignole 5 par des vis 6 de sorte que l'aile inférieure 2c de la panne n'est pas au contact de la semelle 5a, comme cela doit être dans ce type d'assemblage.

Le panneau de couverture amont 3 repose par son bord aval 3b sur l'aile supérieure 2b de la panne 2 et y est fixé par des vis 7. On notera que le bord aval 3b du panneau 3 déborde en aval de la panne aval pour constituer une protection contre la pluie de l'âme 2a de la panne 2. Le panneau de couverture aval 3 repose quant à lui sur l'aile inférieure 2a de la panne 2 par son bord amont 3a et y est également fixé par des vis 7. Pour que cet appui soit correct, l'aile inférieure 2c de chaque panne 2 est dépourvue de retour vers le haut c'est-à-dire en saillie de la surface pour l'appui du panneau 3. Un pli de retour pourra, comme représenté être tourné vers le bas, comme le pli qui borde à l'équerre l'aile supérieure 2b. L'âme 2a de la panne est munie de perforations 8 de sorte que l'espace situé sous les panneaux de couverture 3 communique avec l'atmosphère extérieure et une ventilation du local couvert selon l'invention est possible. Le diamètre de ces trous sera choisi entre 4 et 12 millimètres. Leur densité dans l'âme 2a de la panne sera fonction de la résistance à devoir conserver pour la panne.

Contrairement à ce qu'il est d'usage de faire dans ce domaine, un panneau amont et un panneau aval adjacents sont montés respectivement sur l'aile supérieure et sur l'aile inférieure d'une même panne, ce qui participe largement à la stabilisation de la structure notamment contre les efforts de cisaillement. Il peut devenir alors superflu de mettre en oeuvre de liens de stabilisation pour lutter contre le déversement des pannes.

## Revendications

1. Structure de toiture ventilée comportant,des arbalétriers (1), sur lesdits arbalétriers (1), des échantignoles (5) comportant une semelle (5a) et un montant (5b), des pannes (2) en tôle mince, profilées à froid pour former une âme (2a) bordée par deux semelles (2b,2c), rapportées sur les arbalétriers (1) par fixation de leur âme (2) au montant des échantignoles (5) susdites et sur ces pannes, des panneaux (3) de couverture en tôle nervurée, chacun possédant un bord amont (3a) et un bord aval (3b) par rapport à la pente du toit, fixés auxdites pannes par l'intermédiaire desdites semelles (2a, 2b), dans ladite structure de toiture ventilée chaque panneau (3) est fixé par son bord amont (3a) sur la semelle inférieure (2c) de la panne (2) qui le soutient en amont et par son bord aval (3b), sur la semelle supérieure (2b) de la panne (2) qui le soutient en aval, certaines au moins desdites pannes (2) ayant une âme (2a) perforée (8).

2. Structure selon la revendication 1, **caractérisée en ce que** la semelle inférieure (2a) de chaque panne (2) est dépourvue de rebord tourné vers le haut.

3. Structure selon l'une des revendications précédentes, **caractérisée en ce que** chaque échantignole (5) mise en oeuvre présente une semelle (5a) de sa fixation sur un arbalétrier (1) non perpendiculaire au montant d'attache de la panne, l'angle (C) en question étant, vu de l'amont, aigu.

4. Structure selon l'une des revendications précédentes, **caractérisée en ce que** la section transversale de chaque panne (2) est en sigma.

5. Structure selon l'une des revendications précédentes, **caractérisée en ce que** la section transversale de chaque panne (2) est en Z.

## Claims

1. Ventilated roofing structure having principal rafters (1), on said principal rafters (1) purlin cleats (5) having a flange (5a) and an upright (5b), purlins (2) made of thin sheet metal and cold-formed to form a web (2a) bordered by two flanges (2b, 2c) which are connected to the principal rafters (1) by securing their web (2) to the upright of said purlin cleats (5) and to these purlins, covering panels (3) made of ribbed sheet metal, each having an upper edge (3a) and a bottom edge (3b) with respect to the slope of the roof, said panels being fixed to said purlins via said flanges (2a, 2b), in said ventilated roofing structure each panel (3) is fixed by its upper edge (3a) to the lower flange (2c) of the purlin (2) which supports it at the top and by its bottom edge (3b), on the upper flange (2b) of the purlin (2) which supports it at the bottom, at least some of said purlins (2) having a perforated (8) web (2a).

2. Structure according to Claim 1, **characterized in that** the lower flange (2a) of each purlin (2) has no upwardly turned rim.

3. Structure according to either of the preceding claims, **characterized in that** each purlin cleat (5) employed has a flange (5a) for fixing it to a principal rafter (1) that is not perpendicular to the upright for attaching the purlin, the angle (C) in question being, as seen from above, acute.

4. Structure according to one of the preceding claims, **characterized in that** the cross section of each purlin (2) is in the form of a sigma.

5. Structure according to one of the preceding claims, **characterized in that** the cross section of each purlin (2) is in the form of a Z.

## Patentansprüche

1. Belüftete Dachstruktur, umfassend Dachsparren (1), an den genannten Dachsparren (1) Knaggen (5), die einen Auflageflansch (5a) und eine Stütze (5b) umfassen, Pfetten (2) aus Feinblech, die kaltprofiliert sind, um einen von zwei Auflageflanschen (2b, 2c) gesäumten Steg (2a) auszubilden, und die an den Dachsparren (1) durch Befestigung ihres Steges (2a) an der Stütze der oben genannten Knaggen angebracht sind, sowie an diesen Pfetten Abdeckplatten (3) aus Rippenblech, die jeweils relativ zur Neigung des Daches einen oberen Rand (3a) und einen unteren Rand (3b) aufweisen und an den genannten Pfetten über die genannten Auflageflansche (2b, 2c) befestigt sind, wobei in der genannten belüfteten Dachstruktur jede Platte (3) mit ihrem oberen Rand (3a) an dem unteren Auflageflansch (2c) der Pfette (2) befestigt ist, die sie stromaufwärts stützt, und mit ihrem unteren Rand (3b) an dem oberen Auflageflansch (2b) der Pfette (2) befestigt ist, die sie stromabwärts stützt, wobei wenigstens einige der genannten Pfetten (2) einen perforierten (8) Steg (2a) haben.

2. Struktur nach Anspruch 1, **dadurch gekennzeichnet, dass** der untere Auflageflansch (2c) jeder Pfette (2) ohne einen nach oben gedrehten Rand ist.

3. Struktur nach einem der vorhergehenden Ansprüche, **dadurch gekennzeichnet, dass** jede verwendete Knagge (5) einen Auflageflansch (5a) für ihre Befestigung an einem Dachsparren (1) aufweist, die nicht senkrecht zur Stütze zur Befestigung der Pfette steht, wobei der betreffende Winkel (C), von oben gesehen, spitz ist.

4. Struktur nach einem der vorhergehenden Ansprüche, **dadurch gekennzeichnet, dass** der Querschnitt jeder Pfette (2) die Form eines Sigma hat.

5. Struktur nach einem der vorhergehenden Ansprüche, **dadurch gekennzeichnet, dass** der Querschnitt jeder Pfette (2) die Form eines Z hat.
